(19) Europäisches Patentamt / European Patent Office / Office européen des brevets

(11) **EP 3 127 879 A1**

(12) **EUROPEAN PATENT APPLICATION**
published in accordance with Art. 153(4) EPC

(43) Date of publication:
**08.02.2017 Bulletin 2017/06**

(21) Application number: **15772692.8**

(22) Date of filing: **31.03.2015**

(51) Int Cl.:
*C03C 27/12* (2006.01)     *C08K 3/10* (2006.01)
*C08L 59/00* (2006.01)

(86) International application number:
**PCT/JP2015/060118**

(87) International publication number:
**WO 2015/152239 (08.10.2015 Gazette 2015/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **31.03.2014 JP 2014074802**

(71) Applicant: **Sekisui Chemical Co., Ltd.**
**Osaka-shi, Osaka 530-0047 (JP)**

(72) Inventors:
• **NAKAJIMA Daisuke**
**Koka-shi**
**Shiga 528-8585 (JP)**
• **MATSUDOU Masaki**
**Koka-shi**
**Shiga 528-8585 (JP)**
• **YAMAGUCHI Kohei**
**Koka-shi**
**Shiga 528-8585 (JP)**

(74) Representative: **Hart-Davis, Jason et al**
**Cabinet Beau de Loménie**
**158, rue de l'Université**
**75340 Paris Cedex 07 (FR)**

(54) **INTERMEDIATE FILM FOR LAMINATED GLASS, AND LAMINATED GLASS**

(57) The present invention aims to provide an interlayer film for laminated glass having all of high rigidity, handleability, adhesiveness to glass, and high transparency. The present invention also relates to a laminated glass including the interlayer film for laminated glass. The present invention relates to an interlayer film for laminated glass including: a polyvinyl acetal resin; a metal atom; and a plasticizer, the interlayer film for laminated glass having a ratio (B/A) between a work of rupture A at 23°C and a work of rupture B at 40°C of 0.55 or higher, the work of rupture A and the work of rupture B being obtained by measurement of tear strength in conformity with JIS K-7128-3.

EP 3 127 879 A1

## Description

TECHNICAL FIELD

The present invention relates to an interlayer film for laminated glass having all of high rigidity, handleability, adhesiveness to glass, and high transparency. The present invention also relates to a laminated glass including the interlayer film for laminated glass.

BACKGROUND ART

Laminated glass is widely used for windowpanes of vehicles such as automobiles, aircraft, buildings, and the like, because it is a form of safety glass that is less likely to scatter even when damaged by external impact. An example of laminated glass is a laminated glass including at least a pair of glass sheets integrated through, for example, an interlayer film for laminated glass which contains a polyvinyl acetal resin such as polyvinyl butyral resin and a plasticizer.

For the purpose of reducing the weight of laminated glass, consideration has recently been made on thinning of a glass sheet used in laminated glass. Thinning of a glass sheet however has a problem of lowering the rigidity of the laminated glass as a whole.

To solve the above problem, use of an interlayer film for laminated glass with high rigidity has been tried to improve the rigidity of the resulting laminated glass as a whole. As such an interlayer film for laminated glass with high rigidity, an interlayer film for laminated glass including an ionomer of a ternary copolymer has been studied (e.g., Patent Literature 1). An interlayer film for laminated glass with high rigidity including an ionomer however has poor handleability and also has poor adhesiveness to glass. Moreover, the interlayer film for laminated glass including an ionomer has a higher haze to have poor transparency.

CITATION LIST

- Patent Literature

Patent Literature 1: JP 2013-28486 A

SUMMARY OF INVENTION

- Technical Problem

The present invention aims to provide an interlayer film for laminated glass having all of high rigidity, handleability, adhesiveness to glass, and high transparency, and a laminated glass including the interlayer film for laminated glass.

- Solution to problem

The present invention relates to an interlayer film for laminated glass including a polyvinyl acetal resin, a metal atom, and a plasticizer, the interlayer film for laminated glass having a ratio (B/A) between a work of rupture A at 23°C and a work of rupture B at 40°C of 0.55 or higher, the work of rupture A and the work of rupture B being obtained by measurement of tear strength in conformity with JIS K-7128-3.

The present invention is specifically described in the following.

According to the interlayer film for laminated glass of the present invention, a ratio (B/A) between a work of rupture A at 23°C and a work of rupture B at 40°C (hereafter, also simply referred to as a ratio (B/A)) of 0.55 or higher. The work of rupture A and the work of rupture B are obtained by measurement of tear strength in conformity with JIS K-7128-3. The use of a polyvinyl acetal resin as a binder resin and setting the ratio (B/A) to 0.55 or higher enable achievement of all of high rigidity, handleability, adhesiveness to glass, and high transparency in the interlayer film for laminated glass of the present invention.

The work of rupture can be calculated by the following method, for example.

First, a test sample in conformity with JIS K-7128-3 is prepared, and the thickness d (mm) thereof is measured with a micrometer ("DIGIMATIC MICROMETER" produced by Mitutoyo Corporation). The test sample after measurement of the thickness is subjected to a tearing test using a universal testing instrument (e.g., "RTC-1350A" produced by A&D Company, Limited) under the conditions of a load cell of 5 kN and a testing rate of 500 mm/min. The tear load F (N) is obtained at every set moving distance (mm) until the test sample is completely torn. The tear load F is measured for each moving distance of 0.02 mm (E represents a total value of F measured for each moving distance of 0.02 mm). Based on the obtained tear load F and the thickness d, a stress S (N/mm$^2$) at the moving distance is obtained using the following equation. The integral of the stress S from the start to the end of the test is calculated as the work of rupture E (J/mm$^2$). S = F/(Width of test sample $\times$ thickness d).

The test sample is left to stand in an incubator at 23°C or 40°C for 10 minutes, and the measurement is immediately started.

Having a ratio (B/A) of 0.55 or higher, the interlayer film for laminated glass of the present invention can exhibit high rigidity and maintain the rigidity of a laminated glass as a whole even when combined with a thin glass sheet. The ratio (B/A) is preferably 0.6 or higher, more preferably 0.65 or higher, still more preferably 0.7 or higher.

In order to achieve the ratio (B/A) of 0.55 or higher while using a polyvinyl acetal resin, for example, a method of using a specific polyvinyl acetal resin together with a metal atom and sufficiently kneading a raw material composition containing the polyvinyl acetal resin and the metal atom may be considered. Employment of such a method presumably allows side chain functional groups (hydroxy groups) of the polyvinyl acetal resin and the metal atom to form ionic bonding in the interlayer film for laminated glass to be obtained, so that the interlayer film can exhibit high rigidity. For higher rigidity, a polyvinyl acetal resin having a carboxyl group is preferably used. For example, preferred is a polyvinyl acetal resin obtained by acetalization of polyvinyl alcohol having a structural unit modified by a carboxylic acid such as itaconic acid.

The interlayer film for laminated glass of the present invention contains a polyvinyl acetal resin.

Containing a polyvinyl acetal resin, the interlayer film for laminated glass of the present invention can exhibit high adhesiveness to glass and high transparency.

The polyvinyl acetal resin is not particularly limited as long as it is a polyvinyl acetal resin obtained by acetalization of polyvinyl alcohol with an aldehyde, and is preferably polyvinyl butyral resin. If necessary, two or more kinds of polyvinyl acetal resins may be used in combination.

The lower limit of the hydroxy group content of the polyvinyl acetal resin is preferably 15 mol%. The use of a polyvinyl acetal resin having a hydroxy group content of 15 mol% or higher allows the hydroxy groups of the polyvinyl acetal resin and the metal atom to form ionic bonding, so that the resulting interlayer film can exhibit high rigidity and have a ratio (B/A) of 0.55 or higher. The lower limit of the hydroxy group content of the polyvinyl acetal resin is more preferably 20 mol%.

The upper limit of the hydroxy group content of the polyvinyl acetal resin is preferably 40 mol%. Use of such a polyvinyl acetal resin prevents the interlayer film for laminated glass to be obtained from becoming too hard. The upper limit of the hydroxy group content of the polyvinyl acetal resin is more preferably 35 mol%.

The lower limit of the acetalization degree of the polyvinyl acetal resin is preferably 50 mol%, and the upper limit thereof is preferably 80 mol%. When the acetalization degree is equal to or higher than the lower limit, the polyvinyl acetal resin and a plasticizer have higher compatibility. When the acetalization degree is equal to or lower than the upper limit, the production efficiency of the interlayer film is improved. The lower limit of the acetalization degree of the polyvinyl acetal resin is more preferably 60 mol%, and the upper limit thereof is more preferably 70 mol%.

The acetalization degree and the hydroxy group content can be measured by a method in conformity with JIS K6728 "Testing methods for polyvinyl butyral".

The polyvinyl acetal resin can be prepared by acetalization of polyvinyl alcohol with an aldehyde.

The polyvinyl alcohol is commonly prepared by saponification of polyvinyl acetate, and polyvinyl alcohol with a saponification degree of 80 to 99.8 mol% is commonly used.

The lower limit of the polymerization degree of the polyvinyl alcohol is preferably 500 and the upper limit thereof is preferably 4000. When the polymerization degree of the polyvinyl alcohol is less than 500, the penetration resistance of the laminated glass to be obtained may be lowered. When the polymerization degree of the polyvinyl alcohol is more than 4000, formation of an interlayer film for laminated glass may be difficult. The lower limit of the polymerization degree of the polyvinyl alcohol is more preferably 1000, and the upper limit thereof is more preferably 3600.

The aldehyde is not particularly limited. Commonly, a C1-C10 aldehyde is suitably used. The C1-C10 aldehyde is not particularly limited, and examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. Among these, preferred are n-butyraldehyde, n-hexylaldehyde, and n-valeraldehyde, and more preferred is n-butyraldehyde. These aldehydes may be used alone or in combination of two or more thereof.

The interlayer film for laminated glass of the present invention contains a metal atom. The metal atom contained enables formation of ionic bonding between hydroxy groups of the polyvinyl acetal resin and the metal atom, so that the interlayer film for laminated glass can exhibit high rigidity and have a ratio (B/A) of 0.55 or higher.

Examples of the metal atom include alkali metals such as lithium, sodium, potassium, rubidium, cesium, and francium, alkaline earth metals such as calcium, strontium, barium, and radium, and zinc. In particular, sodium among the alkali metals and zinc are preferred because they are easily introduced into a resin.

The metal atom can be added to the interlayer film for laminated glass in the form of a metal salt such as a hydroxide, a carbonate, a bicarbonate, or a fatty acid salt with a metal.

The interlayer film for laminated glass commonly contains a salt of an alkali metal or an alkaline earth metal as an adhesion modifier. The metal atom may be partly contained as the adhesion modifier.

The lower limit of the amount of the metal atom added is preferably 50 ppm. Addition of 50 ppm or more of a metal atom enables formation of ionic bonding between hydroxy groups of the polyvinyl acetal resin and the metal atom, so that the interlayer film for laminated glass to be obtained can exhibit high rigidity and have a ratio (B/A) of 0.55 or higher. The lower limit of the amount of the metal atom added is more preferably 100 ppm. The upper limit of the amount of the metal atom added is not particularly limited. However, if the amount exceeds 2000 ppm, the moisture resistance of the interlayer film for laminated glass to be obtained may be lowered.

The interlayer film for laminated glass of the present invention contains a plasticizer. Containing a plasticizer, the interlayer film for laminated glass to be obtained has better adhesiveness to glass.

Examples of the plasticizer include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapryate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, oil-modified alkyd sebacate, mixtures of phosphates and adipates, adipates, mixed-type adipates prepared from C4-C9 alkyl alcohol and C4-C9 cyclic alcohol, and C6-C8 adipates such as hexyl adipate. Among the above plasticizers, particularly preferred is triethylene glycol-di-2-ethylhexanoate (3GO).

The amount of the plasticizer is not particularly limited, and the lower limit of the amount based on 100 parts by weight of the thermoplastic resin is preferably 10 parts by weight, and the upper limit thereof is preferably 60 parts by weight. When the amount of the plasticizer is within this range, the interlayer film for laminated glass can exhibit high handleability. The lower limit of the amount of the plasticizer is more preferably 15 parts by weight, and the upper limit thereof is more preferably 45 parts by weight.

The interlayer film for laminated glass of the present invention may optionally contain additives such as ultraviolet absorbers, antioxidants, light stabilizers, adhesion modifiers, pigments, dyes, and fluorescent brighteners.

The ultraviolet absorbers are not particularly limited, and examples thereof include benzotriazole compounds, benzophenone compounds, triazine compounds, benzoate compounds, and hindered amine compounds.

The antioxidants are not particularly limited, and examples thereof include 2,2-bis[[[3-(3,5-di-tert-butyl-4-hydroxyphenyl)propionyl]oxy]methyl]propane-1,3-diol, 1,3-bis[3-(3,5-di-tert-butyl-4-hydroxyphenyl)propionate], 4,4'-thiobis(6-tert-butyl-3-methylphenol), 4,4'-dimethyl-6,6'-di(tert-butyl)[2,2'-methylenebis(phenol)], 2,6-di-t-butyl-p-cresol, and 4,4'-butylidene bis-(6-t-butyl-3-methylphenol).

The lower limit of the thickness of the interlayer film for laminated glass of the present invention is preferably 0.1 mm, and the upper limit thereof is preferably 3 mm. When the thickness of the interlayer film for laminated glass is less than 0.1 mm, the laminated glass to be obtained may have lower penetration resistance. When the thickness of the interlayer film for laminated glass is more than 3 mm, the interlayer film for laminated glass to be obtained may have lower transparency. The lower limit of the thickness of the interlayer film for laminated glass is more preferably 0.25 mm, and the upper limit thereof is more preferably 2 mm.

The interlayer film for laminated glass of the present invention may be a single-layer interlayer film for laminated glass including a single resin layer or a multilayer interlayer film for laminated glass including a laminate of two or more resin layers.

The interlayer film for laminated glass of the present invention is, for example, produced by mixing the plasticizer, a compound as a raw material of a metal atom, and additives, if needed, kneading the resulting mixture and the polyvinyl acetal resin sufficiently, and forming an interlayer film for laminated glass.

For sufficient formation of ionic bonding between side chain functional groups (hydroxy groups) of the polyvinyl acetal resin and the metal atom, it is important to knead the polyvinyl acetal resin and the metal atom sufficiently. More specifically, they are kneaded with a mixing roll or a kneader.

The present invention also encompasses a laminated glass including a pair of glass sheets and the interlayer film for laminated glass of the present invention positioned between the pair of glass sheets.

The laminated glass of the present invention can include a thinner glass sheet than conventional laminated glass because the interlayer film for laminated glass of the present invention itself has high rigidity.

The glass sheets may be commonly used transparent plate glass. Examples thereof include inorganic glass such as float plate glass, polished plate glass, molded plate glass, wired glass, wire-reinforced plate glass, colored plate glass, heat-absorbing glass, heat-reflecting glass, and green glass. UV light-shielding glass in which a UV light-shielding coating is formed on the surface of glass is also usable. Moreover, organic plastic sheets such as polyethylene terephthalate, polycarbonate, or polyacrylate sheets may also be used.

As the glass sheets, two or more kinds of glass sheets may be used. Exemplary cases thereof include a laminated glass in which the interlayer film for laminated glass of the present invention is sandwiched between a transparent float plate glass and a colored glass sheet such as green glass. Moreover, as the glass sheets, two or more kinds of glass sheets different in the thickness may be used.

- Advantageous Effects of Invention

The present invention can provide an interlayer film for laminated glass having all of high rigidity, handleability, adhesiveness to glass, and high transparency, and a laminated glass including the interlayer film for laminated glass.

DESCRIPTION OF EMBODIMENTS

Embodiments of the present invention are more specifically described with reference to, but not limited to, examples.

(Example 1)

(1) Preparation of polyvinyl acetal resin

Modified polyvinyl alcohol (modification amount by itaconic acid: 1.2 mol%) having a polymerization degree of 1900 was butyralized with n-butyraldehyde to give polyvinyl butyral resin. The obtained polyvinyl butyral resin had a hydroxy group content of 23 mol% and an acetalization degree of 13 mol%.

(2) Preparation of interlayer film for laminated glass

An amount of 100 parts by weight of the obtained polyvinyl butyral resin was blended with 40 parts by weight of triethylene glycol-2-ethylhexanoate (Sekisui Chemical Co., Ltd.) as a plasticizer and zinc acetate (Wako Pure Chemical Industries, Ltd.) in an amount that gives a zinc concentration in the film of 100 ppm. They were mixed using a mixing roll at a rotational speed of 50 rpm and a set temperature of 150°C for 10 minutes to give a resin composition.
The obtained resin composition was extruded through an extruder to give a single-layer interlayer film for laminated glass with a thickness of 0.5 mm.

(Example 2)

An interlayer film for laminated glass was obtained in the same manner as in Example 1, except that zinc acetate (Wako Pure Chemical Industries, Ltd.) was added in an amount that gives a zinc concentration in the film of 200 ppm.

(Example 3)

An interlayer film for laminated glass was obtained in the same manner as in Example 1, except that, instead of zinc acetate, sodium hydrogen carbonate (Tosoh Corporation) was added in an amount that gives a sodium concentration in the film of 100 ppm.

(Example 4)

An interlayer film for laminated glass was obtained in the same manner as in Example 1, except that, instead of zinc acetate, sodium hydrogen carbonate (Tosoh Corporation) was added in an amount that gives a sodium concentration in the film of 200 ppm.

(Comparative Example 1)

An interlayer film for laminated glass was obtained in the same manner as in Example 1, except that zinc acetate was not added.

(Comparative Example 2)

A commercially available ionomer ("1705" produced by Du Pont) was kneaded with a mixing roll at a rotational speed of 50 rpm and a set temperature of 150°C for 10 minutes, and extruded through an extruder to give a single-layer interlayer film for laminated glass with a thickness of 0.5 mm.

(Comparative Example 3)

A commercially available ionomer ("3701" produced by Du Pont) was kneaded with a mixing roll at a rotational speed of 50 rpm and a set temperature of 150°C for 10 minutes, and extruded through an extruder to give a single-layer interlayer film for laminated glass with a thickness of 0.5 mm.

(Evaluation)

The interlayer films for laminated glass obtained in the examples and the comparative examples were evaluated by the following methods.
Table 1 shows the results.

(1) Measurement of work of rupture

A test sample was prepared from each obtained interlayer film for laminated glass in conformity with JIS K-7128-3. The thickness d (mm) of the sample was measured with a micrometer ("DIGIMATIC MICROMETER" produced by Mitutoyo Corporation).
The sample after measurement of the thickness was then subjected to a tearing test using a universal testing instrument ("RTC-1350A" produced by A&D Company, Limited) under the conditions of a load cell of 5 kN and a testing rate of 500 mm/min. The tear load F (N) is obtained at every set moving distance (mm) until the test sample is completely torn.
Based on the obtained tear load F and the thickness d, stress S ($N/mm^2$) at the moving distance was obtained using the following equation. The integral of the stress S from the start to the end of the test was calculated as the work of rupture E ($J/mm^2$).

$$S = F/(\text{Width of test sample} \times \text{thickness d}).$$

The test sample was left to stand in an incubator at 0°C, 23°C, or 40°C for 10 minutes, and the measurement is immediately started.

(2) Measurement of adhesiveness to glass

The measurement was performed in conformity with JIS K6854-2 with a TENSILON universal testing instrument ("RTM-500" produced by Orientec Co., LTD.) at 23°C and a rate of 500 mm/min.

(3) Measurement of visible light transmittance and haze value

The visible light transmittance of the obtained laminated glass was measured within a wavelength range of 380 to 780 nm using a spectrophotometer ("U-4100" produced by Hitachi High-Technologies Corporation) in conformity with JIS R3211 (1988). The haze value (Hz value) of the laminated glass was measured with a haze meter ("TC-H3PP type" produced by Tokyo Denshoku Co., Ltd.) in conformity with JIS K 7105.

[Table 1]

| | | Example 1 | Example 2 | Example 3 | Example 4 | Comparative Example 1 | Comparative Example 2 | Comparative Example 3 |
|---|---|---|---|---|---|---|---|---|
| Work of rupture J/mm² (measured value) | -10°C | 0.062 | 0.064 | 0.074 | 0.069 | 0.064 | 0.221 | 0.299 |
| | 20°C (A) | 0.164 | 0.170 | 0.126 | 0.163 | 0.162 | 0.298 | 0.375 |
| | 40°C (B) | 0.140 | 0.148 | 0.131 | 0.128 | 0.087 | 0.273 | 0.414 |
| Ratio | (B/A) | 0.85 | 0.87 | 1.04 | 0.78 | 0.54 | 0.92 | 1.10 |
| Adhesiveness to glass (N/50mm) | | 72.4 | 71.7 | 75.6 | 74 | 72.4 | 1.9 | 6.5 |
| Visible light transmittance (%) | | 88.2 | 87.3 | 87.6 | 87.7 | 86.4 | 85.8 | 77.5 |
| Haze value | | 0.5 | 0.7 | 0.4 | 0.5 | 0.6 | 6.6 | 7.9 |

INDUSTRIAL APPLICABILITY

The present invention can provide an interlayer film for laminated glass that can achieve all of high rigidity, handleability, adhesiveness to glass, and high transparency, and a laminated glass including the interlayer film for laminated glass.

**Claims**

1. An interlayer film for laminated glass comprising:

   a polyvinyl acetal resin;
   a metal atom; and
   a plasticizer,

   the interlayer film for laminated glass having a ratio (B/A) between a work of rupture A at 23°C and a work of rupture B at 40°C of 0.55 or higher, the work of rupture A and the work of rupture B being obtained by measurement of tear strength in conformity with JIS K-7128-3.

2. The interlayer film for laminated glass according to claim 1,
   wherein the polyvinyl acetal resin has a hydroxy group content of 15 mol% or higher and contains 50 ppm or more of the metal atom.

3. The interlayer film for laminated glass according to claim 1 or 2,
   wherein the metal atom is an alkali metal, an alkaline earth metal, or zinc.

4. A laminated glass comprising a pair of glass sheets and the interlayer film for laminated glass according to claim 1, 2, or 3 positioned between the pair of glass sheets.

## INTERNATIONAL SEARCH REPORT

| International application No. |
| --- |
| PCT/JP2015/060118 |

**A. CLASSIFICATION OF SUBJECT MATTER**
*C03C27/12*(2006.01)i, *C08K3/10*(2006.01)i, *C08L59/00*(2006.01)i

According to International Patent Classification (IPC) or to both national classification and IPC

**B. FIELDS SEARCHED**

Minimum documentation searched (classification system followed by classification symbols)
C03C27/12, C08K3/10, C08L59/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
JSTPlus(JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2000-38456 A (Sekisui Chemical Co., Ltd.), 08 February 2000 (08.02.2000), claims; paragraphs [0001], [0076] to [0078], [0084], [0093]; table 1 (Family: none) | 1-4 |
| A | WO 2000/018698 A1 (Sekisui Chemical Co., Ltd.), 06 April 2000 (06.04.2000), claims; page 5, line 29 to page 6, line 3; page 9, line 23 to page 11, line 10 & US 2002/136906 A1 & EP 1036775 A1 | 1-4 |
| A | JP 11-106595 A (Asahi Denka Co., Ltd.), 20 April 1999 (20.04.1999), claims; paragraphs [0001], [0021], [0035] to [0039] (Family: none) | 1-4 |

☐ Further documents are listed in the continuation of Box C. ☐ See patent family annex.

| | |
| --- | --- |
| *  Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
| --- | --- |
| Date of the actual completion of the international search<br>04 June 2015 (04.06.15) | Date of mailing of the international search report<br>16 June 2015 (16.06.15) |
| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013028486 A